# FASCICULE DE BREVET EUROPEEN

(11) **EP 4 466 726 B1**
(45) Date de publication et mention de la délivrance du brevet: **13.08.2025**
(21) Numéro de dépôt: 23703634.8
(22) Date de dépôt: 12.01.2023
(51) Int. Cl.: H01H 1/20, H01H 9/10, H01H 9/34, H01H 85/02

(54) **CONTACTEUR AVEC GUIDES D'ARC ET PROTECTION INTEGREE AUX GUIDES D'ARC, SYSTEME ET AERONEF CORRESPONDANT**
SCHÜTZE MIT LICHTBOGENFÜHRUNGEN UND INTEGRIERTEM SCHUTZ FÜR LICHTBOGENFÜHRUNGEN, SYSTEM UND ENTSPRECHENDES FLUGZEUG
CONTACTOR WITH ARC GUIDES AND INTEGRATED ARC GUIDE PROTECTION, SYSTEM AND CORRESPONDING AIRCRAFT

(30) Priorité: 18.01.2022 FR 2200412
(43) Date de publication de la demande: 27.11.2024
(73) Titulaire: Safran Electrical & Power, 31702 Blagnac (FR)
(72) Inventeur: PRIEUR, Guillaume, 77550 MOISSY-CRAMAYEL (FR); BELTAN, Cecil, 77550 MOISSY-CRAMAYEL (FR); ENOUF, Kévin, 77550 MOISSY-CRAMAYEL (FR)
(74) Mandataire: Cabinet Beau de Loménie
(86) Numéro de dépôt international: PCT/FR2023/050042
(87) Numéro de publication internationale: WO 2023/139325

(56) Documents cités:
- EP-A1- 2 463 876
- EP-A1- 3 716 304
- DE-A1- 3 824 027

## Description

### Domaine Technique

L'invention se rapporte au domaine général de la distribution d'énergie électrique, en particulier au sein des aéronefs. Elle concerne tout particulièrement les contacteurs utilisés dans les systèmes de distribution d'énergie électrique des aéronefs.

### Technique antérieure

Dans un aéronef, on utilise un système de distribution d'énergie électrique de type HVDC (« High Voltage Direct Current » soit courant continu haute tension en français). L'alimentation des charges électriques par les sources électriques n'est généralement pas réalisée directement, car on utilise des contacteurs pour contrôler cette alimentation ou pour commuter la puissance dans le système de distribution.

Un montage typique comporte la source HVDC, un boîtier de distribution, des câbles pour la connexion de la source avec le boîtier de distribution, et une charge électrique connectée au boîtier de distribution. Dans le boitier de distribution, sur chaque phase, un contacteur est agencé en série pour faire l'interface entre la source électrique et la ou les charges électriques.

On rappelle qu'un contacteur comporte en général deux contacts électriques et un pont mobile déplaçable entre une position dite fermée dans laquelle le pont mobile est en contact avec le premier contact électrique et le deuxième contact électrique, et une position dite ouverte dans laquelle le pont mobile est espacé du premier contact électrique et du deuxième contact électrique.

De l'état de la technique antérieure, on connait des contacteurs décrits dans les documents EP 1388154 et EP 2278599.

Le document EP 2463876 A1 décrit un contacteur selon le préambule de la revendication 1.

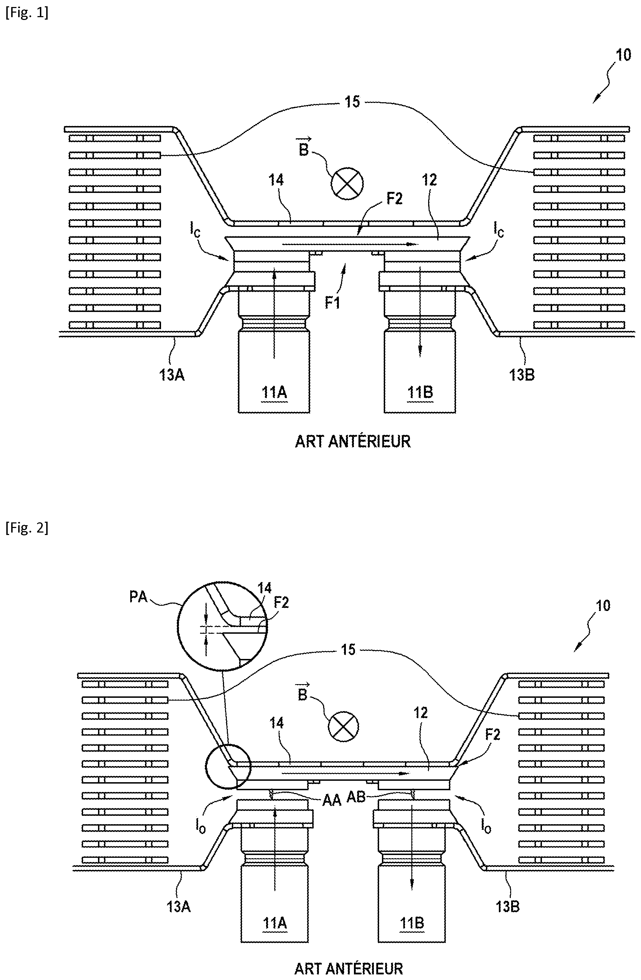

Comme on va le voir en référence aux figures 1 à 5, à l'ouverture du pont mobile, des arcs électriques apparaissent.

La figure 1 est une vue en coupe schématique d'un contacteur 10 selon l'art antérieur. Ce contacteur comporte un premier contact électrique 11A, un deuxième contact électrique 11B, et un pont mobile 12.

Sur la figure, le pont mobile 12 est dans la position fermée. Sa face inférieure F1 est en contact avec les deux contacts électriques 11A et 11B, au niveau des interfaces de contacts IC. De ce fait, le courant peut circuler à travers le contacteur du premier contact 11A vers le deuxième contact 11B à travers le pont mobile 12. La circulation du courant est représentée par des flèches en trait épais sur la figure.

On peut noter que le contacteur comporte en outre un guide d'arc inférieur, comprenant une première portion 13A connectée au premier contact électrique 11A, qui s'étend dans la direction opposée au deuxième contact électrique par rapport au premier contact électrique. Le guide d'arc inférieur comprend en outre une deuxième portion 13B connectée au deuxième contact électrique 11B, qui s'étend dans la direction opposée au premier contact électrique par rapport au deuxième contact électrique. Le guide d'arc inférieure s'étend dans la portion inférieure du contacteur, délimitée par le pont mobile (sur la figure, en dessous du pont mobile, on a la portion inférieure, et au-dessus du pont mobile, on a la portion supérieure).

Du côté de la face supérieure F2 du pont mobile, qui est opposée à la face F1, dans la portion supérieure du contacteur, un guide d'arc supérieur 14 est agencé.

Aux extrémités latérales du contacteur, entre le guide d'arc supérieur et le guide d'arc inférieur, des ailettes 15 de coupure d'arc sont agencées.

Le guide d'arc inférieur et le guide d'arc supérieur ont une forme configurée pour que l'espace entre ces guides d'arc augmente lorsque l'on s'éloigne des contacts électriques (par exemple cet espace augmente depuis le premier contact électrique 11A dans la direction opposée au deuxième contact électrique 11B, et cet espace augmente depuis le deuxième contact électrique 11B dans la direction opposée au premier contact électrique 11A).

En outre, bien que cela ne soit pas représenté sur la figure, le contacteur comporte des aimants permanents générant un champ magnétique *̅B̅*̅, dont la direction rentrant dans le plan de la figure est symbolisée par une croix dans un cercle.

On va maintenant décrire l'apparition des arcs électriques et le fonctionnement des guides d'arc du contacteur selon l'art antérieur décrit en référence à la figure 1.

Sur la figure 2, on a représenté la séparation des contacts entre le pont mobile 12 et le premier contact électrique 11A d'une part, et le pont mobile 12 et le deuxième contact électrique 11B d'autre part. A l'interface ouverte IO entre le pont mobile et le premier contact électrique 11A, un premier arc électrique AA, et, simultanément, à l'interface ouverte IO entre le pont mobile et le deuxième contact électrique 11B, un deuxième arc électrique AB se forment. Les deux arcs électriques AA et AB sont formés par ionisation de l'air aux interfaces ouvertes IO. Ainsi, un courant continue de circuler à travers le contacteur.

Sur la figure 2, on a également représenté un agrandissement de l'interface entre le guide d'arc supérieur 14 et le pont mobile 12. Ces deux éléments ne sont pas destinés à être en contact dans la position dite ouverte.

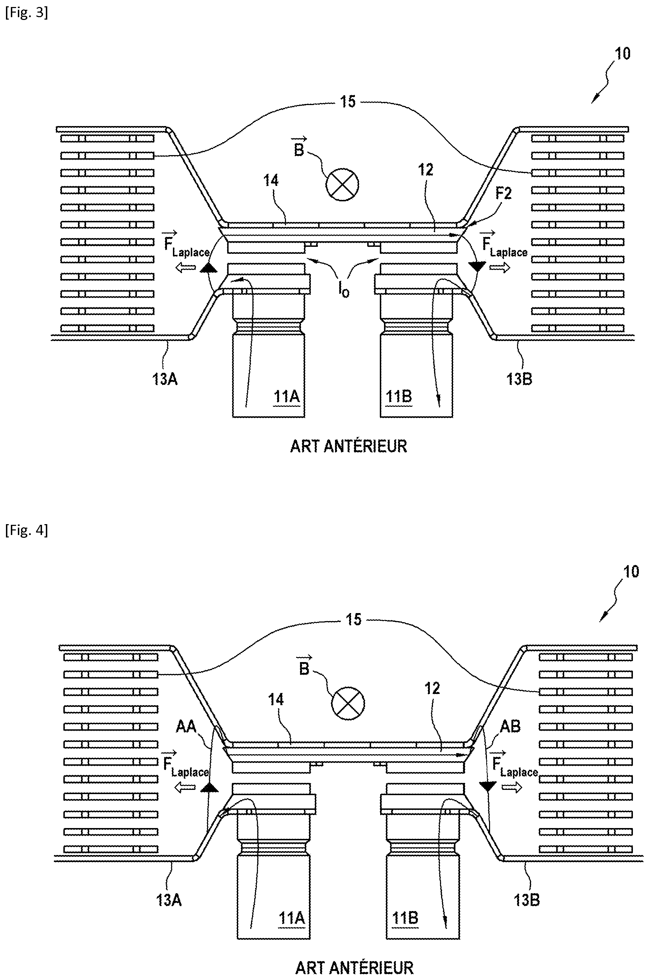

La figure 3 montre, peu de temps après l'ouverture représentée sur la figure 2, le déplacement de part et d'autre du pont mobile des arcs AA et AB. Plus précisément, l'arc AA se déplace vers le côté gauche sur la figure, et l'arc AB se déplace vers le côté droit sur la figure. Ces deux déplacements résultent de la présence du champ magnétique *̅B̅*̅ et de son effet sur la force de Laplace (désignée *F̅_{Laplace}* sur la figure). Comme on peut le voir sur la figure, la forme des guides d'arc fait rallonger les arcs électriques AA et AB, ce qui peut favoriser leur coupure.

Sur la figure 4, on a représenté les arcs électriques continuant de se déplacer vers les côtés, peu de temps après leur déplacement représenté sur la figure 3. Sur cette figure, on peut observer la déformation des arcs qui viennent lécher les guides d'arc. Aussi, à ce stade, le courant circule toujours dans le pont mobile.

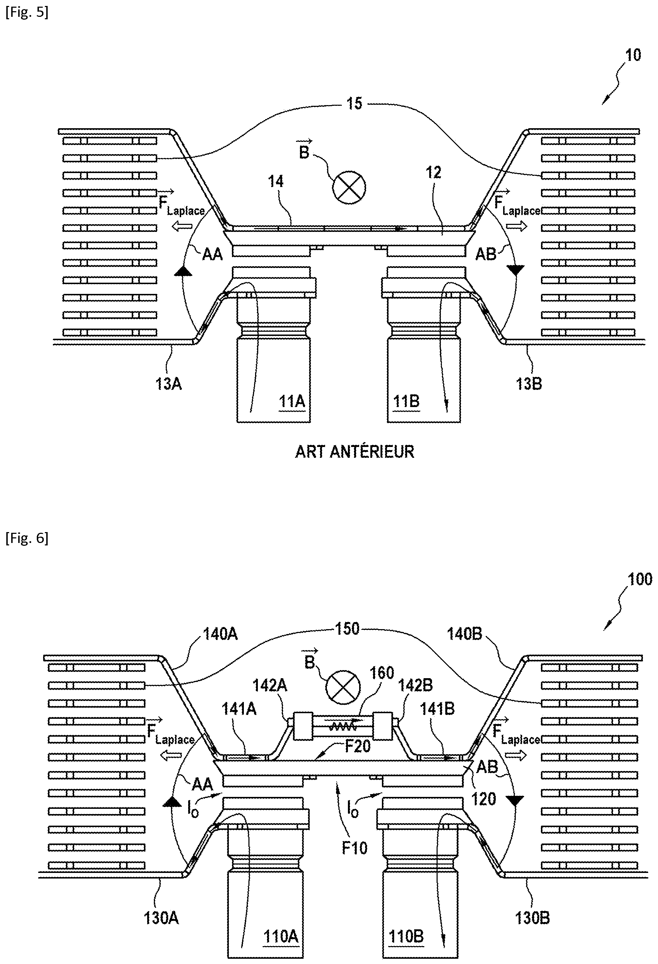

Ultérieurement et comme représenté sur la figure 5, le courant cesse de suivre le chemin passant par les arcs électriques léchant les guides d'arc et le pont, dans la portion supérieur, pour passer entièrement dans le guide d'arc supérieur 14. Dans la portion inférieure, le courant passe en partie par les deux portions de guide d'arc inférieur 13A et 13B.

Les arcs électriques AA et AB peuvent se maintenir Indéfiniment, mais on souhaite généralement les couper en 3 millisecondes. En fait, au-delà de 30 millisecondes, un arc électrique peut endommager l'intérieur du contacteur.

Si le courant qui traverse le contacteur a une intensité trop importante, les ailettes 15 peuvent ne pas être adaptées pour couper les arcs AA et AB, qui vont stagner dans ou devant ces ailettes.

On rappelle que ces arcs électriques sont des plasmas de plusieurs milliers de degrés, qui, s'ils sont maintenus trop longtemps, peuvent endommager le contacteur voire se propager au-delà du contacteur.

Il existe donc un besoin pour une solution qui évite ces endommagements.

Les arcs étant particulièrement problématiques pour les courants d'intensité élevée, on peut utiliser des fusibles en série avec les contacteurs destinés à fondre lors de l'apparition de ces courants d'intensité élevée (typiquement lorsqu'un court-circuit apparait).

A cet effet, on connait les fusibles utilisés dans des systèmes HVDC dans le domaine de l'automobile, ou encore les dispositifs appelés pyrofuse.

Si l'ajout d'un fusible ou d'un pyrofuse en série avec le contacteur pourrait fonctionner, cette solution a pour inconvénient de nécessiter des composants encombrants, lourds, et difficiles à intégrer autour des contacteurs.

L'invention vise notamment à pallier ces inconvénients.

### Exposé de l'invention

A cet effet, l'invention propose un contacteur destiné à être utilisé dans un système de distribution d'énergie électrique au sein d'un aéronef et comportant un premier contact électrique, un deuxième contact électrique, et un pont mobile déplaçable entre une position dite fermée dans laquelle le pont mobile est en contact avec le premier contact électrique et le deuxième contact électrique, et une position dite ouverte dans laquelle le pont mobile est espacé du premier contact électrique et du deuxième contact électrique, le pont mobile ayant une première face destinée à être en contact avec le premier contact électrique et le deuxième contact électrique dans la position fermée, et une deuxième face opposée à la première face,
le contacteur comportant en outre :
- un guide d'arc inférieur comprenant une première portion connectée au premier contact électrique, s'étendant dans la direction opposée au deuxième contact électrique par rapport au premier contact électrique, et une deuxième portion connectée au deuxième contact électrique, s'étendant dans la direction opposée au premier contact électrique par rapport au deuxième contact électrique,
- un guide d'arc supérieur situé du côté de la deuxième face du pont mobile et comprenant une première portion faisant face à la première portion du guide d'arc inférieur, une deuxième portion faisant face à la deuxième portion du guide d'arc inférieur, et un fusible reliant la première portion et la deuxième portion du guide d'arc supérieur.

Par faisant face, on entend qu'un arc électrique peut être formé entre ces deux portions, même si elles sont inclinées l'une par rapport à l'autre.

Ainsi, l'invention propose d'utiliser un fusible directement dans le contacteur, pour couper le passage du courant lors d'un passage du courant au niveau du guide d'arc supérieur. Dans ce cas, qui apparait après une ouverture du pont mobile, pour une durée donnée et un courant donné (c'est-à-dire I²t supérieur à une utilisation nominale du fusible), le fusible fondera et coupera l'arc.

On pourra choisir les dimensions du fusible en fonction de l'application et en particulier en fonction de la durée pendant laquelle on accepte de voir les arcs électriques maintenus pour un courant donné. On peut en particulier utiliser un fusible plus petit que si l'on place un fusible en série avec le contacteur (ou un pyrofuse), car aucun courant ne passe par le fusible visé ici lorsque le contacteur est en position fermée. Ainsi, on obtient une protection contre le maintien des arcs électriques, avec un impact faible sur la masse totale et sur l'encombrement.

Le guide d'arc supérieur comprend donc ici deux parties distinctes connectées à travers le fusible.

A titre indicatif, il est observé que l'utilisation d'un guide d'arc supérieur et d'un guide d'arc inférieur peut permettre, par la configuration des guides d'arcs, de déplacer les arcs électriques de la zone de contact à la zone de coupure en allongeant l'arc avant que ce dernier n'atteigne par exemple des ailettes si elles sont présentes. L'élongation de l'arc peut être une première étape de coupure en ce qu'elle réduit progressivement le courant. Par exemple, l'utilisation d'un guide d'arc supérieur et d'un guide d'arc supérieur permet de mieux contrôler le déplacement de l'arc.

Selon un mode de réalisation particulier, le guide d'arc supérieur comprend une pluralité de fusibles connectés électriquement entre la première portion et la deuxième portion du guide d'arc supérieur.

On pourra donc utiliser un circuit avec plusieurs fusibles, ou un unique fusible. Si plusieurs fusibles sont utilisés, ils peuvent être connectés en série et/ou en parallèle entre les deux portions de guide d'arc.

Selon un mode de réalisation particulier, le guide d'arc supérieur comprend un support pour fusible pour accueillir par connexion ledit fusible, ou plusieurs supports pour accueillir chaque fusible de la pluralité de fusibles si le guide d'arc supérieur comprend une pluralité de fusibles.

Le fusible peut donc être un composant discret, qui vient se connecter sur un support de fusible.

Selon un mode de réalisation particulier, le contacteur est configuré pour recevoir un courant nominal continu d'intensité I, et dans lequel le fusible/la pluralité de fusible est configurée pour entrer en fusion en recevant un courant supérieur à 10 fois I pour une durée supérieure à 50 ms, ou pour une durée supérieure à 10 ms.

Typiquement, pour I égal à 400A, le fusible peut être configuré pour entrer en fusion en recevant un courant supérieur à 4000A pour une durée supérieure à 50ms, voire pour une durée supérieure à 10 ms.

Selon un mode de réalisation particulier, le fusible/la pluralité de fusible est configurée pour ne pas entrer en fusion en recevant un courant de l'ordre de I pour une durée inférieure ou égale à 10 ms.

Un courant de l'ordre de I sera par exemple compris dans une plage de plus ou moins 10% autour de de la valeur de I.

En fait, le guide d'arc supérieur sera passant pour des courants résultant d'arcs qui résultent eux-mêmes du passage du courant nominal. Cela ne nécessite pas d'avoir un fusible qui entre en fusion à ce stade.

Avec ce mode de réalisation on peut utiliser des fusibles peu volumineux et peu massiques.

On notera que si un fusible était utilisé en série avec le contacteur, ce fusible pourrait par exemple devoir accepter un courant de 400A en permanence, et ce fusible serait bien plus volumineux que le fusible utilisé ici qui n'est traversé par un courant que lors de l'apparition d'arcs pour une durée par exemple inférieure à 10 millisecondes et pour un courant de 400A.

En fait, un fusible capable d'accepter de manière permanente 400A peut accepter, par exemple, 500A pendant 10 secondes, ou encore 5000A pendant 0.1 secondes (on a (500A)²x10s=(5000A)²x0.1s).

.

Si on utilise un fusible qui peut accepter 400A pendant 10ms et par exemple un régime permanent atteint à 1000s, on a : (400A)²*0.01s = (12.7A)² * 1000s. En d'autres termes, le fusible qui peut accepter 400A pendant 10ms peut accepter 12.7A en permanence. Mais, puisqu'un fusible 400A, 1000V, a des dimensions d'environ 135mm*52mm*73mm pour 500 grammes, et un fusibles 10A, 1000V, fait 38mm de longueur et 10mm de diamètre pour 10 grammes, celui de 10A (environ) sera bien moins volumineux et lourd.

L'invention propose également un système de distribution d'énergie électrique comprenant une source de courant continu à haute tension (par exemple qui délivre un courant nominal continu d'intensité I), un contacteur tel que défini ci-avant ayant un premier contact électrique connecté à la source de courant continu à haute tension et un deuxième contact électrique connecté à une borne du système pour la connexion d'une charge.

L'invention propose également un aéronef comprenant un système de distribution d'énergie électrique tel que défini ci-avant.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] La figure 1, déjà décrite, illustre de manière schématique un contacteur selon l'art antérieur en position fermée.
[Fig. 2] La figure 2, déjà décrite, illustre de manière schématique le contacteur de la figure 1 en position ouverte.
[Fig. 3] La figure 3, déjà décrite, montre le déplacement des arcs électriques après l'ouverture visible sur la figure 2.
[Fig. 4] La figure 4, déjà décrite, montre le déplacement des arcs électriques après le premier déplacement visible sur la figure 3.
[Fig. 5] La figure 5, déjà décrite, montre le passage du courant à travers le guide d'arc supérieur.
[Fig. 6] La figure 6 montre un contacteur selon un mode de réalisation.
[Fig. 7] La figure 7 est un graphique qui montre la fusion des fusibles utilisés dans le contacteur de la figure 6.
[Fig. 8] La figure 8 montre un système de distribution électrique selon un mode de réalisation, compris dans un aéronef.

### Description des modes de réalisation

On va maintenant décrire un contacteur équipé d'un fusible, selon un mode de réalisation.

La figure 6 est une vue en coupe schématique d'un contacteur. Ce contacteur comporte un premier contact électrique 110A, un deuxième contact électrique 110B, et un pont mobile 120.

Sur la figure, le pont mobile 120 est dans la position ouverte. Sa face inférieure F10 est espacée des deux contacts électriques 110A et 110B, au niveau des interfaces ouvertes IO. De ce fait, le courant ne peut circuler à travers le contacteur du premier contact 110A vers le deuxième contact 110B qu'à travers des arcs électriques décrits ci-après. La circulation du courant est représentée par des flèches en trait épais sur la figure.

Le contacteur comporte en outre un guide d'arc inférieur, comprenant une première portion 130A connectée au premier contact électrique 110A, qui s'étend dans la direction opposée au deuxième contact électrique par rapport au premier contact électrique. Le guide d'arc inférieur comprend en outre une deuxième portion 130B connectée au deuxième contact électrique 110B, qui s'étend dans la direction opposée au premier contact électrique par rapport au deuxième contact électrique. Le guide d'arc inférieur s'étend dans la portion inférieure du contacteur, délimitée par le pont mobile (comme visible sur la figure, en dessous du pont mobile, on voit la portion inférieure, et au-dessus du pont mobile, on voit la portion supérieure).

Du côté de la face supérieure F20 du pont mobile, qui est opposée à la face F10, dans la portion supérieure du contacteur, un guide d'arc supérieur est agencé. Ce guide d'arc supérieur comporte une première portion140A qui fait face à la première portion du guide d'arc inférieur 130A, par faire face, on entend qu'un arc électrique peut être formé entre ces deux guides d'arcs, bien qu'ils soient inclinés l'un par rapport à l'autre. Le guide d'arc supérieur comporte une deuxième portion 140B qui fait face à la deuxième portion 130B du guide d'arc inférieur.

La première portion 140A comporte en outre une sous-portion 141A parallèle et faisant face à la face supérieure F20 (elle est espacée de cette face), et la deuxième portion 140B comporte en outre une sous-portion 141B parallèle et faisant face à la face supérieure F20 (elle est également espacée de cette face).

La connexion entre les deux portions 140A et 140B du guide d'arc supérieur est réalisée au moyen d'un fusible 160. Ce fusible est connecté aux portions 140A et 140B à travers un support pour fusible en deux parties, une partie 142A connectée à la sous-portion 141A , et une partie 142B connectée à la sous-portion 141B.

A ses extrémités latérales, entre le guide d'arc supérieur et le guide d'arc inférieur, des ailettes 150 de coupure d'arc sont agencées.

Le guide d'arc inférieur et le guide d'arc supérieur ont une forme configurée pour que l'espace entre ces guides d'arc augmente lorsque l'on s'éloigne des contacts électriques (par exemple cet espace augmente depuis le premier contact électrique 110A dans la direction opposée au deuxième contact électrique 110B, et cet espace augmente depuis le deuxième contact électrique 110B dans la direction opposée au premier contact électrique 110A).

En outre, bien que cela ne soit pas représenté sur la figure, le contacteur comporte des aimants permanents générant un champ magnétique *̅B̅*̅, dont la direction rentrant dans le plan de la figure est symbolisée par une croix dans un cercle. Ce champ magnétique *̅B̅*̅ provoque le déplacement des arcs électriques vers les côtés du contacteur, au moyen de la force de Laplace (désignée *F̅_{Laplace}* sur la figure).

Sur la figure, on a représenté le contacteur en position ouverte, avec un arc électrique AA formé entre la première portion 130A du guide d'arc inférieur et la première portion 140A du guide d'arc supérieur, et un arc électrique AB formé entre la deuxième portion 130B du guide d'arc inférieur et la deuxième portion 140B du guide d'arc supérieur.

Les deux arcs ont une existence qui a été suffisamment longue pour que le courant circule à travers le guide d'arc supérieur, comme représenté sur la figure.

Et, comme illustré, le courant, pour passer de la première portion 140A du guide d'arc à la deuxième portion 140B du guide d'arc, doit passer par le fusible 160.

Le dimensionnement du fusible pourra être fait pour que le fusible entre en fusion après une durée donnée, et pour un courant donné.

Par exemple, pour un contacteur configuré pour recevoir un courant nominal continu d'intensité I (par exemple 400A), le fusible est configuré pour entrer en fusion en recevant un courant supérieur à 10 fois I pour une durée supérieure à 50 ms, ou pour une durée supérieure à 10 ms, selon l'application.

Aussi, le fusible peut être configuré pour ne pas entrer en fusion en recevant un courant de l'ordre de I pour une durée inférieure ou égale à 10 ms.

L'homme du métier pourra dimensionner le fusible pour vérifier ces conditions.

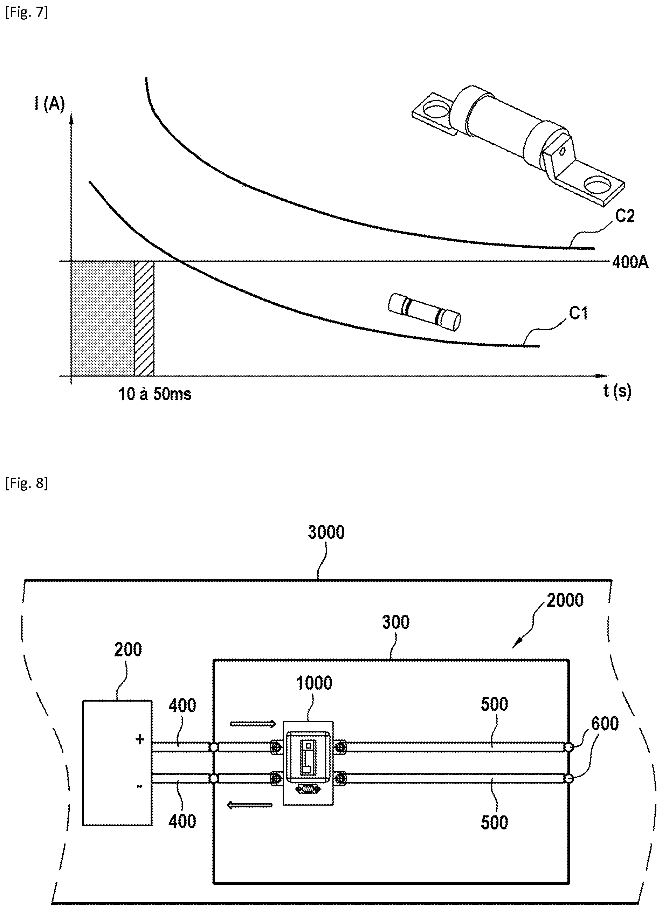

La figure 7 est un graphique qui montre les courbes de fusion (appelée courbes I²t) de deux fusibles utilisables pour protéger un contacteur.

Plus précisément, la courbe C1 montre la courbe de fusion I²t d'un fusible tel que le fusible 160 utilisable dans le contacteur 100 décrit en référence à la figure 6, capable de supporter le passage d'un courant de 400A pendant une durée légèrement supérieure à 10 millisecondes sans fondre, mais pas au-delà.

Par contre, si l'on devait utiliser un fusible en série avec le contacteur pour éviter les pics de courants qui apparaissent lors de l'apparition d'un court-circuit, on utiliserait un fusible en accord avec la courbe C2, toujours au-dessus des 400A nominaux, car toujours traversé par ce courant puisqu'en série avec le contacteur. Un fusible en accord avec la courbe C2 est plus volumineux et plus massique qu'un fusible en accord avec la courbe C1 utilisable dans le contacteur selon l'invention.

Sur la figure 8, on a représenté de manière schématique un système de distribution d'énergie électrique 2000 comprenant une source de courant continu haute tension 200, un boîtier de distribution 300, et des câbles 400 qui connectent la source 200 au boîtier de distribution 300.

Dans le boîtier de distribution 300, pour chaque phase, on a un contacteur et ici, les deux contacteurs sont dans un boîtier de contacteur 1000. Les contacteurs peuvent être ceux décrits en référence à la figure 6.

Le contacteur est connecté par des barre bus 500 à des sorties 600 pour la connexion d'une charge électrique.

Sur la figure, on a représenté partiellement un aéronef 3000 dans lequel le système 2000 est utilisé.

Les modes de réalisation décrits-ci-avant permettent de protéger les contacteurs utilisés dans les aéronefs, avec un impact sur le poids et la masse des aéronefs qui est limité par rapport à d'autres solutions dans lesquelles on pourrait mettre en série un fusible avec un contacteur.

## Revendications

1. Contacteur destiné à être utilisé dans un système de distribution d'énergie électrique (2000) au sein d'un aéronef (3000) et comportant un premier contact électrique (110A), un deuxième contact électrique (110B), et un pont mobile (120) déplaçable entre une position dite fermée dans laquelle le pont mobile est en contact avec le premier contact électrique et le deuxième contact électrique, et une position dite ouverte dans laquelle le pont mobile est espacé du premier contact électrique et du deuxième contact électrique, le pont mobile ayant une première face (F10) destinée à être en contact avec le premier contact électrique et le deuxième contact électrique dans la position fermée, et une deuxième face (F20) opposée à la première face,
le contacteur comportant en outre :
- un guide d'arc inférieur comprenant une première portion (130A) connectée au premier contact électrique, s'étendant dans la direction opposée au deuxième contact électrique par rapport au premier contact électrique, et une deuxième portion (130B) connectée au deuxième contact électrique, s'étendant dans la direction opposée au premier contact électrique par rapport au deuxième contact électrique,
- un guide d'arc supérieur situé du côté de la deuxième face du pont mobile et comprenant une première portion (140A) faisant face à la première portion du guide d'arc inférieur, une deuxième portion (140B) faisant face à la deuxième portion du guide d'arc inférieur, et **caractérisé par** un fusible (160) reliant la première portion et la deuxième portion du guide d'arc supérieur.

2. Contacteur selon la revendication 1, dans lequel le guide d'arc supérieur comprend une pluralité de fusibles connectés électriquement entre la première portion et la deuxième portion du guide d'arc supérieur.

3. Contacteur selon la revendication 1 ou 2, dans lequel le guide d'arc supérieur comprend un support (142A, 142B) pour fusible pour accueillir par connexion ledit fusible, ou plusieurs supports pour accueillir chaque fusible de la pluralité de fusibles si le guide d'arc supérieur comprend une pluralité de fusibles.

4. Contacteur selon l'une quelconque des revendications 1 à 3, dans lequel le contacteur est configuré pour recevoir un courant nominal continu d'intensité I, et dans lequel le fusible/la pluralité de fusible est configurée pour entrer en fusion en recevant un courant supérieur à 10 fois I pour une durée supérieure à 50 ms, ou pour une durée supérieure à 10 ms.

5. Contacteur selon la revendication 4, dans lequel le fusible/la pluralité de fusible est configurée pour ne pas entrer en fusion en recevant un courant de l'ordre de I pour une durée inférieure ou égale à 10ms.

6. Système de distribution d'énergie électrique comprenant une source (200) de courant continu à haute tension, un contacteur selon l'une quelconque des revendications 1 à 5 ayant un premier contact électrique connecté à la source de courant continu à haute tension et un deuxième contact électrique connecté à une borne (600) du système pour la connexion d'une charge.

7. Aéronef comprenant un système de distribution d'énergie électrique selon la revendication 6.

## Patentansprüche

1. Schütz zur Verwendung in einem Verteilungssystem elektrischer Energie (2000) innerhalb eines Luftfahrzeugs (3000) und umfassend einen ersten elektrischen Kontakt (110A), einen zweiten elektrischen Kontakt (110B) und eine beweglichen Brücke (120), die zwischen einer sogenannten geschlossenen Position, in der die bewegliche Brücke in Kontakt mit dem ersten elektrischen Kontakt und dem zweiten elektrischen Kontakt ist, und einer sogenannten offenen Position, in der die bewegliche Brücke von dem ersten elektrischen Kontakt und dem zweiten elektrischen Kontakt beabstandet ist, verlagerbar ist, wobei die bewegliche Brücke eine erste Seite (F10), die dazu bestimmt ist, in der geschlossenen Position mit dem ersten elektrischen Kontakt und dem zweiten elektrischen Kontakt in Kontakt zu sein, und eine zweite Seite (F20) gegenüber der ersten Seite aufweist,
wobei das Schütz ferner umfassend:
- eine untere Lichtbogenführung, umfassend einen ersten Abschnitt (130A) umfasst, der mit dem ersten elektrischen Kontakt verbunden ist und sich in Bezug auf den ersten elektrischen Kontakt in die dem zweiten elektrischen Kontakt entgegengesetzte Richtung erstreckt, und einen zweiten Abschnitt (130B), der mit dem zweiten elektrischen Kontakt verbunden ist und sich in Bezug auf den zweiten elektrischen Kontakt in die entgegengesetzte Richtung des ersten elektrischen Kontakts erstreckt,
- eine obere Lichtbogenführung, die sich auf der Seite der zweiten Seite der beweglichen Brücke befindet und einen ersten Abschnitt (140A) umfasst, der dem ersten Abschnitt der unteren Lichtbogenführung zugewandt ist, einen zweiten Abschnitt (140B), der dem zweiten Abschnitt der unteren Lichtbogenführung zugewandt ist, und der durch eine Sicherung (160) gekennzeichnet ist, die den ersten Abschnitt und den zweiten Abschnitt der oberen Lichtbogenführung verbindet.

2. Schütz nach Anspruch 1, wobei die obere Lichtbogenführung eine Vielzahl von Sicherungen umfasst, die elektrisch zwischen dem ersten Abschnitt und dem zweiten Abschnitt der oberen Lichtbogenführung verbunden sind.

3. Schütz nach Anspruch 1 oder 2, wobei die obere Lichtbogenführung einen Halter (142A, 142B) für Sicherung zum Aufnehmen durch Verbindung der Sicherung oder mehrere Halter zum Aufnehmen jeder Sicherung der Vielzahl von Sicherungen umfasst, wenn die obere Lichtbogenführung eine Vielzahl von Sicherungen umfasst.

4. Schütz nach einem der Ansprüche 1 bis 3, wobei das Schütz konfiguriert ist, um einen nominalen Gleichstrom mit Stromstärke I zu erhalten, und wobei die Sicherung/die Vielzahl von Sicherungen konfiguriert ist, um bei Erhalt eines Stroms von mehr als dem 10-fachen von I über eine Dauer von mehr als 50 ms oder über eine Dauer von mehr als 10 ms zu schmelzen.

5. Schütz nach Anspruch 4, wobei die Sicherung/die Vielzahl von Sicherungen konfiguriert ist, um nicht zu schmelzen, indem sie einen Strom in der Größenordnung von I über eine Dauer von weniger als oder gleich wie 10 ms erhält.

6. Verteilungssystem elektrischer Energie, umfassend eine Quelle (200) von Hochspannungsgleichstrom, einen Schütz nach einem der Ansprüche 1 bis 5, der einen ersten elektrischen Kontakt, der mit der Hochspannungsgleichstromquelle verbunden ist, und einen zweiten elektrischen Kontakt, der mit einem Anschluss (600) des Systems für die Verbindung einer Last verbunden ist.

7. Luftfahrzeug, umfassend ein Verteilungssystem elektrischer Energie nach Anspruch 6.

## Claims

1. A contactor intended to be used in an electrical power distribution system (2000) within an aircraft (3000) and including a first electrical contact (110A), a second electrical contact (110B), and a movable bridge (120) movable between a so-called closed position in which the movable bridge is in contact with the first electrical contact and the second electrical contact, and a so-called open position in which the movable bridge is spaced apart from the first electrical contact and the second electrical contact, the movable bridge having a first face (F10) intended to be in contact with the first electrical contact and the second electrical contact in the closed position, and a second face (F20) opposite the first face,
the contactor further including:
- a lower arc guide comprising a first portion (130A) connected to the first electrical contact, extending in the direction opposite the second electrical contact with respect to the first electrical contact, and a second portion (130B) connected to the second electrical contact, extending in the direction opposite the first electrical contact with respect to the second electrical contact,
- an upper arc guide located on the side of the second face of the movable bridge and comprising a first portion (140A) facing the first portion of the lower arc guide, a second portion (140B) facing the second portion of the lower arc guide, and **characterized by** a fuse (160) connecting the first portion and the second portion of the upper arc guide.

2. The contactor according to claim 1, wherein the upper arc guide comprises a plurality of fuses electrically connected between the first portion and the second portion of the upper arc guide.

3. The contactor according to claim 1 or 2, wherein the upper arc guide comprises a fuse holder (142A, 142B) for connecting said fuse, or a plurality of holders for each fuse of the plurality of fuses if the upper arc guide comprises a plurality of fuses.

4. The contactor according to any one of claims 1 to 3, wherein the contactor is configured to receive a continuous nominal current of intensity I, and wherein the fuse/the plurality of fuses is configured to melt on receiving a current greater than 10 times I for a duration greater than 50 ms, or for a duration greater than 10 ms.

5. The contactor according to claim 4, wherein the fuse/the plurality of fuses is configured not to melt on receiving a current of the order of I for a duration less than or equal to 10 ms.

6. An electrical power distribution system comprising a high voltage direct current source (200), a contactor according to any one of claims 1 to 5 having a first electrical contact connected to the high voltage direct current source and a second electrical contact connected to a terminal (600) of the system for connection of a load.

7. An aircraft comprising an electrical power distribution system according to claim 6.
